# EUROPEAN PATENT APPLICATION

(11) **EP 1 793 634 A1**
(43) Date of publication of application: **06.06.2007**
(21) Application number: 05781334.7
(22) Date of filing: 01.09.2005
(51) Int. Cl.: H04Q 7/38, H04M 1/00, H04M 1/725

(54) **INFORMATION TERMINAL**

(30) Priority: 03.09.2004 JP 2004257001
(71) Applicant: MATSUSHITA ELECTRIC INDUSTRIAL CO., LTD., Kadoma-shi, Osaka 571-8501 (JP)
(72) Inventor: USHIJIMA, Tetsuya, Matsushita Industrial Co.,Ltd., Chuo-Ku,Osaka-shi, Osaka 540-6319 (JP)
(74) Representative: Grünecker, Kinkeldey, Stockmair & Schwanhäusser Anwaltssozietät
(86) International application number: PCT/JP2005/016016
(87) International publication number: WO 2006/025492

(57) **Abstract**

The present invention has an object to provide an information terminal capable of firmly notifying an occurrence of an event without making a user uncomfortable.

The information terminal is provided with: reproducing means 11 for reproducing content data; sensing means 12 for sensing an event occurred while the content data is reproduced; and modulating means 20D for modulating said content data; in which when the sensing means senses 12 the occurrence of the event, the modulating means 20D modulates the content data.

## Description

### <Technical Field>

The present invention is related to a technique for notifying an event occurred while a content is reproduced.

### Background Art

Very recently, information terminals such as portable telephones are provided with functions capable of reproducing contents such as sound and images, and also, equipped with functions capable of notifying events such as telephone calls occurred while contents are reproduced. As technical ideas for notifying events such as telephone calls, the following technical ideas have been proposed: That is, in order to notify such events, vibrators are driven; reproducing operations of contents are interrupted; sound volume of contents under reproduction is lowered (patent publications 1 and 2); and also, balance between contents under reproduction and telephone communication sound is changed (patent publication 3).
Patent Publication 1: JP-A-2004-080395
Patent Publication 2: JP-A-2001-145167
Patent Publication 3: JP-A-2002-027029
Patent Publication 4: JP-A-2003-258988

### <Disclosure of the Invention>

### <Problems that the Invention is to Solve>

However, the conventional technical ideas own various problems. For instance, when an event happens to occur, content voice under reproduction is suddenly interrupted, or sound volume is lowered, so that this makes users uncomfortable. In the case that a vibrator of an information terminal is driven when an event is notified, if the information terminal is not close contacted to body skin of a user, then vibrations of the vibrator can be hardly sensed. Especially, since the user cannot hear the vibration sound when the user wears a headphone, there is another problem that the user cannot become aware of the event. Also, there is a further problem that a user is amazed by such a fact that an information terminal is suddenly vibrated, and sound is produced by these vibrations.

An object of the present invention is to provide an information terminal capable of firmly notifying an occurrence of an event without making a user uncomfortable.

### <Means for Solving the Problems>

An information terminal of the present invention is featured by comprising: reproducing means for reproducing content data; sensing means for sensing an event occurred while the content data is reproduced; and modulating means for modulating the content data in which when the sensing means senses the occurrence of the event, the modulating means modulates the content data. In accordance with this arrangement, since the information terminal can notify the occurrence of the event by modulating the content itself while the content is reproduced, the occurrence of the event can be firmly notified without making the user uncomfortable.

The information terminal of the present invention is featured by that a sort of the content data which is modulated by the modulating means is an image. Otherwise, a sort of the content data which is modulated by the modulating means is voice . In accordance with the above-explained arrangement, the modulating operation can be carried out in response to the sort of the content.

The information terminal of the present invention is featured by further comprising selecting means for selecting a sort of the content data which is modulated by the modulating means. Also, the information terminal of the present invention is featured by comprising notifying means for issuing notification in a plurality of notification forms different from each other when the sensing means senses the occurrence of the event; and selecting means for selecting an arbitrary notification form from the plurality of notification forms. Also, the information terminal of the present invention is featured by that the notifying means includes light emitting means for notifying the occurrence of the event by emitting light. Also, the information terminal of the present invention is featured by that the notifying means includes vibrating means for notifying the occurrence of the event by way of vibrations. In accordance with the above-explained arrangement, the means to be notified can be changed in correspondence with the sort of occurring event. Also, the user can arbitrarily set the means to be notified.

### <Advantage of the Invention>

In accordance with the information terminal of the present invention, the occurrence of the event can be notified by modulating the content itself while the content is reproduced, the occurrence of the event can be firmly notified without making the user uncomfortable.

### <Brief Description of the Drawings>

Fig. 1 is a block diagram for indicating an arrangement of an information terminal according to the present invention.
Fig. 2 is a sequence diagram for explaining operations (user setting sequence) of the information terminal of the present invention.
Fig. 3 is a sequence diagram for explaining operations (call receiving operation sequence) of the information terminal of the present invention.
Fig. 4 is a sequence diagram for describing operations (call receiving operation sequence) of the information terminal of the present invention.

### <Description of Reference Numerals and Signs>

- 11: contents data reproducing means
- 12: event sensing means
- 12A: call reception sensing means
- 12B: mail sensing means
- 12C: schedule alarm sensing means
- 12D: key sensing means
- 12E: warning sensing means
- 13: notification mode selecting/setting means
- 14: notification form selecting means
- 15: modulation method selecting means
- 16: modulation signal producing means
- 18: display unit
- 19: audio output unit
- 20: driving means
- 20A: light emitting diode driving means
- 20B: vibrator driving means
- 20C: melody reproducing means
- 20D: modulating means
- 21: CPU
- 22: status holding means

### <Best Mode for Carrying Out the Invention>

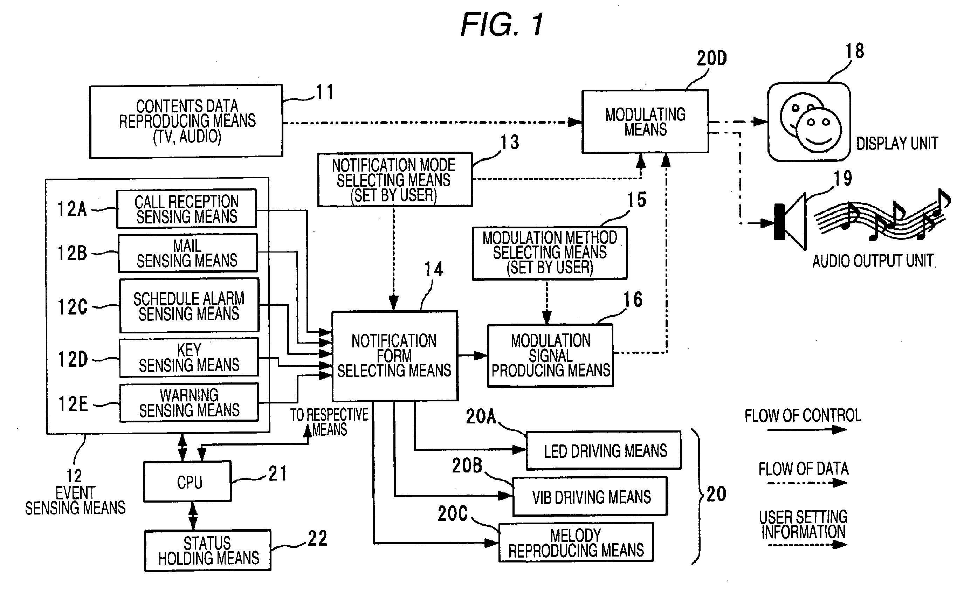

Fig. 1 is a block diagram for schematically indicating an arrangement of an information terminal according to the present invention. As shown in Fig. 1, the information terminal contains a contents data reproducing means 11, an event sensing means 12, a notifying means 20, and a notification form selecting means 14. The contents data reproducing means 11 reproduces contents data and outputs the reproduced contents data to a display unit 18 and a audio output unit 19. The event sensing means 12 senses an event occurred while the contents data is reproduced. The notifying means 20 notifies an occurrence of an event by way of an LED driving means 20A, a VIB driving means 20B, a melody reproducing means 20C, and a modulating means 20D for modulating the contents data. The notification form selecting means 14 selects a notification form by way of a notification mode setting means 13 set by a user.

The event notifying means 12 contains a call reception sensing means 12A, a mail sensing means 12B, a schedule alarm sensing means 12C, a key sensing means 12D, and a warning sensing means 12E. The call reception sensing means 12A senses a reception of a telephone call. The mail sensing means 12B senses a reception of an electronic mail. The schedule alarm sensing means 12C senses an alarm as to a scheduled day/time. The key sensing means 12D senses a key input. The warning sensing means 12E senses various sorts of warning.

The modulating means 20b modulates the contents by using a modulation signal supplied from the modulation signal producing means 16. A sort (sound, picture) of contents which are to be modulatedmaybe set by the user by operating amodulation method selecting means 15.

The information terminal is further provided with a CPU (Central Processing Unit) 21 and a status holding means 22. The CPU 21 controls an entire unit of the information terminal. The status holding means 22 holds a status set by the user.

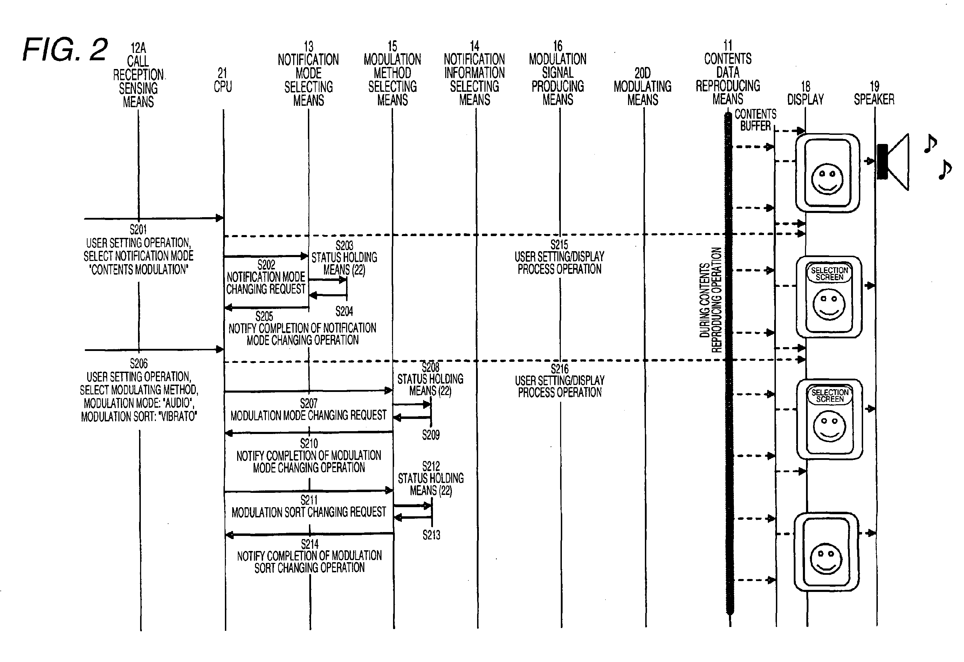

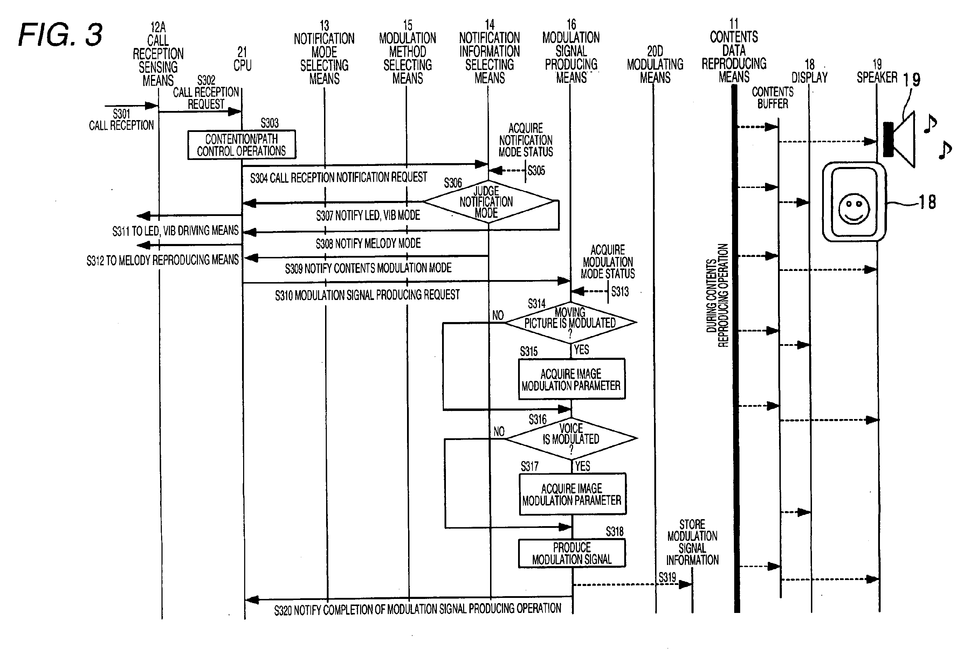

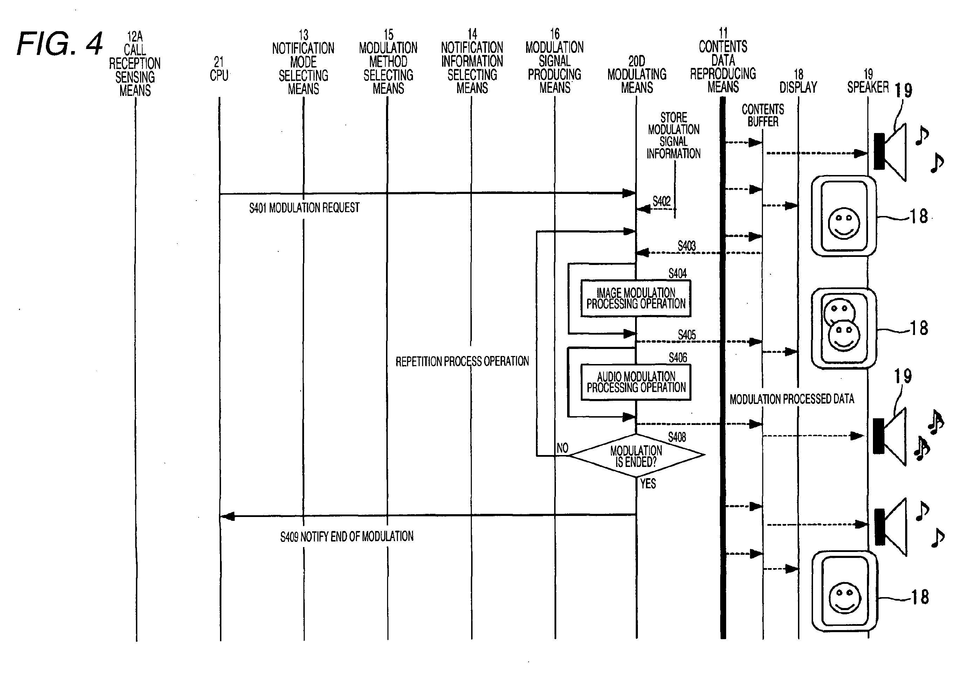

Fig. 2, Fig. 3, and Fig. 4 are diagrams for indicating sequences used to explain operations of the information terminal indicated in Fig. 1. Namely, Fig. 2 indicates a user setting sequence, and Fig. 3 and Fig. 4 represent call receiving operation sequences.

As to the user setting sequence shown in Fig. 2, there are a user setting sequence executed by the notification mode selecting means 13, and a user setting sequence executed by the modulation method selecting means 15. First, in response to a user setting operation executed by the notification mode selectingmeans 13 (S201), the CPU 21 issues a request of changing a notification form with respect to the notification mode selecting means 13 (S202), and holds the changed notification form by the status holding means 22 (S203 and S204). That is, the CPU 21 requests to change the notification form into any one of a telephone call, a mail reception, a schedule, an alarm, a key, and a generation of warning sound. When the changing operation of the notification form is completed, completion notification is returned from the notification mode selecting means 13 to the CPU 21 (S205), so that the selecting/setting operation of the notification mode is accomplished. It should be noted that when the user performs a setting/displaying process operation, a selection screen of the notification mode is displayed on the display unit 18 (S215).

In response to a user setting operation by the modulation method selecting means 15 (S206), the CPU 21 issues a modulation mode changing request with respect to the modulation method selecting means 15 (S207), and holds the changed modulation mode in the status holding means 22 (S208 and S209). When the changing operation of the modulation mode is accomplished, completion notification is returned from the modulation method selecting means 15 to the CPU 21 (S210), so that the selecting /setting operation of the modulation mode (forexample, "audio") is accomplished. In response to the user setting operation by the modulation method selecting means 15 (S206), the CPU 21 issues a modulation sort changing request with respect to the modulation method selecting means 15 (S211), and holds the changed modulation sort in the status holding means 22 (S212 and S213). When the changing operation of the modulation sort is accomplished, completion notification is returned from the modulation method selecting means 15 to the CPU 21 (S214), so that the selecting/setting operation of the modulation sort (for example, "vibrato") is accomplished. It should also be understood that the selecting/setting operations by the notification mode selecting means 13 and the modulation method selecting means 15 are carried out irrespective of such a condition as to whether or not a contents reproducing operation is performed. When the user performs the setting/display process operation, a selection screen of the modulation methods is displayed on the display unit 18 (S216). Also, setting notification with respect to the user when a user setting operation is carried out is not limited only to screen display operations (pop up, and superimpose), but may be alternatively carried out by voice, LED, VIB (vibrations), and the like.

Reproducing operations of contents by the contents data reproducing means 11 are carried out in a parallel manner, and outputs made by the contents reproducing operations are outputted via contents buffers to the display unit 18 and the audio output unit 19.

In the call reception operation sequence shown in Fig. 3, for instance, when the call reception sensing means 12A firstly senses a reception of a telephone call within the event sensing means 12 of the information terminal (S301), the call reception sensing means 12A requests a call reception with respect to the CPU 21 (S302). The CPU 21 executes a contention control and a path control within the information terminal with respect to a telephone call reception which is requested (S303), and issues a call reception notification request with respect to the notification information selectingmeans 14 (S304). The notification information selecting means 14 acquires a notification mode status from the notification mode selecting means 13 (S305), and judges a notification mode (S306).

As a result of the judging operation, the notification information selecting means 14 notifies mode notification by the light emitting diode, or the vibration (S307); mode notification by melody (S308); and mode notification by the contents modulation (S309) to the CPU 21. The CPU 21 notifies the respective notification to the light emitting diode driving means 20A, the vibrator driving means 20B, and the melody reproducing means 20C (S311 and S312).

When a notification mode signal of a contents modulation is received as the judging result of thenotificationmode (S309), the CPU 21 issues a modulation signal producing request with respect to the modulation signal producing means 16 (S310). The modulation signal producing means 16 acquires modulation mode status information from the modulation method selecting means 15 (S313), and judges as to whether or not an image is modulated (S314) . In the case that the modulation of the image is carried out (Yes), the modulation signal producing means 16 produces a modulation parameter of the image (S315).

Subsequently, the modulation signal producing means 16 judges as to whether or not the voice is modulated (S316), and then, when the modulation of the voice is performed (Yes), the modulation signal producing means 16 acquires a modulation parameter of the voice (S317). When the modulation signal producing means 16 acquires the modulation parameter, the modulation signal producing means 16 produces a modulation signal (S318), stores the produced modulation signal as modulation signal information (S319), and notifies a completion of the modulation signal producing operation with respect to theCPU21 (S320), so that a series of modulation signal producing operations are accomplished.

The reproducing operations of the contents by the contents data reproducing means 11 are carried out in the parallel manner, and then, the contents reproduced outputs of the image and the voice are outputted via the contents buffers to the display unit 18 and the audio output unit 19.

Next, the CPU 21 receives the notification as to the completion of the modulation signal producing operation (S320), and then, as shown in Fig. 4, issues a modulation request to the modulating means 17 (S401). The modulating means 17 receives the modulation signal information which has been stored by receiving the modulation request (S402), requests the contents from the contents buffers (S403, S405, 5407), and then, executes an image modulating process operation (S404) and an audio modulating process operation (S406) as to the received contents. Both image information and audio information, which correspond to the contents which have been modulated, are outputted via the contents buffers to the display unit 18, the audio output unit 19, so that the image is displayed on the display unit 18, and the audio information is outputted from the audio output unit 19.

After the image display operation is performed by the display unit 18 and the audio output operation is performed by the audio output unit 19, the modulating process operation by the modulating means 17 is repeatedly carried out until the internal status of the information terminal is brought into a modulation operation ending status (S408). When the modulating process operation is ended (Yes), the modulating means 17 outputs notification as to a completion of the modulating operation with respect to the CPU 21 (S409).

In the modulating process operations, in the case that the content is an image, this image is modulation-processed so as to produce a monochromatic image, a sepia image, a ghost (dual image display) image, a ripple (swinging) image, or such an image which is displayed on a transparent sphere. Otherwise, the same screen is subdivided into a plurality of screens, and this image is displayed on these subdivided screens. In the case that the content is audio information, this audio information is modulation-processed so as to produce various sorts of audio information by way of an AM modulation (tremolo), an FM modulation (vibrato), a PM modulation, a time stretch (to stretch audio information), voice in water (indistinct voice), a voice whose pitch is changed in such a case that a user sucks helium gas to make sound, or pseudo voice which is resembled to sound reproduced from a record disk.

In the case that the contents obtained by these modulating process operations correspond to reproduced images, the images of the contents are displayed on the display unit 18 when the telephone calls are received in such a manner that the images on the screen are changed into sepia images, monochromatic images, ghost images (dual image display), or ripple pattern images. As a result, events occurred while the contents are reproduced can be notified to the user.

Also, in the case that the contents correspond to audio signals, when telephone calls are received, the vibrato process operation is performed, such a voice process operation that the user talks as if this user talked in water is performed, or another process operation for changing a reproducing speed of voice is carried out with respect to the voice signals. As a result, events occurred while the contents are reproduced can be notified to the user.

Also, for example, when the warning sensingmeans 12 senses an issue of a low voltage alarm, while a key of sound is ascended, or descended, an image is changed into either a monochromatic tone or a sepia tone. As a result, an event occurred while the contents are reproduced can be notified to the user.

It should be understood that the modulation signal data (parameters) selected by the notification mode selecting means 13 and the modulation method selecting means 15 may be previously prepared, may be alternatively downloaded from an external source, or may be alternatively produced on the side of the user.

It should also be understood that as the contents data, data combined with sound and images such as TV programs, movies, and games may be conceived. Also, sound data such as music, radio, voice reorder, call reception melody, and effect sound may be conceived. Further, image data such as photographs may be conceived.

The information terminal of the present invention may be applied to a portable telephone, a PDA, a game machine, and the like.

While the present invention has been described in detail, or with reference to the specific embodiment mode, it is apparent for ordinarily-skilled engineers that the present invention may be modified and changed without departing from the technical spirit and scope of the invention.

The present patent application has been made based upon a Japanese Patent Application No. 2004-257001 filed on September 3, 2004, the contents of which are incorporated herein as references.

### <Industrial Applicability>

Since the information terminal of the present invention can notify the occurrence of the event by modulating the content itself while the content is reproduced, the information terminal owns such an effect that the occurrence of the event can be firmly notified without making the user uncomfortable. The information terminal of the present invention may own a merit as the technical idea capable of notifying the event occurred while the contents are reproduced.

## Claims

1. An information terminal comprising:
reproducing means for reproducing content data;
sensing means for sensing an event occurred while said content data is reproduced; and
modulating means for modulating said content data
wherein:
when said sensingmeans senses the occurrence of the event, said modulating means modulates said content data.

2. The information terminal as claimed in claim 1 wherein:
a sort of the content data which is modulated by said modulating means is an image.

3. The information terminal as claimed in claim 1, or claim 2 wherein:
a sort of the content data which is modulated by said modulating means is voice.

4. The information terminal as claimed in claim 1, claim 2, or claim 3, further comprising:
selecting means for selecting a sort of the content data which is modulated by said modulating means.

5. The information terminal recited in any one of claim 1 to claim 4, comprising:
notifying means for issuing notification in a plurality of notification forms different from each other when said sensing means senses the occurrence of the event; and
selecting means for selecting an arbitrary notification form from said plurality of notification forms.

6. The information terminal as claimed in claim 5 wherein:
said notifying means includes light emitting means for notifying the occurrence of the event by emitting light.

7. The information terminal as claimed in claim 5, or claim 6 wherein:
said notifying means includes vibrating means for notifying the occurrence of the event by way of vibrations.
